# EUROPEAN PATENT SPECIFICATION

(11) **EP 3 286 056 B1**
(45) Date of publication and mention of the grant of the patent: **06.01.2021**
(21) Application number: 16712800.8
(22) Date of filing: 23.03.2016
(51) Int. Cl.: B60W 30/18, B60W 50/14

(54) **SYSTEM AND METHOD FOR A FULL LANE CHANGE AID SYSTEM WITH AUGMENTED REALITY TECHNOLOGY**
SYSTEM UND VERFAHREN FÜR SPURWECHSELASSISTENZSYSTEM MIT TECHNOLOGIE AUF DER GRUNDLAGE VON ERWEITERTER REALITÄT
SYSTÈME ET PROCÉDÉ POUR UN SYSTÈME D'ASSISTANCE AU CHANGEMENT DE VOIE COMPLET AVEC UNE TECHNOLOGIE DE RÉALITÉ AUGMENTÉE

(43) Date of publication of application: 28.02.2018
(73) Proprietor: Deutsche Telekom AG, 53113 Bonn (DE)
(72) Inventor: HUI, Pan, Hong Kong (CN); YANG, Da, Hong Kong (CN); ZHANG, Wenxiao, Hong Kong (CN); PEYLO, Christoph, 49401 Damme (DE)
(74) Representative: Vossius & Partner Patentanwälte Rechtsanwälte mbB
(86) International application number: PCT/EP2016/056334
(87) International publication number: WO 2017/162278

(56) References cited:
- WO-A1-2015/156818
- DE-A1-102006 043 150
- US-A1- 2005 222 753
- US-A1- 2012 257 045
- US-A1- 2012 296 522
- US-A1- 2013 142 385

## Description

The present invention relates to a lane change aid system, more particularly to a lane change aid system, using augmented reality to display lane change guidance information. Moreover, lane change algorithms are used, including a lane change decision algorithm, a lane change preparation algorithm, and a lane change execution algorithm.

US 2013/0142385 A discloses a method to display a ghosting image upon a transparent windscreen head-up display in a vehicle. The method includes monitoring an operating environment of the vehicle, monitoring a driver registration input, determining a registered desired location graphic illustrating a future desired location for the vehicle based upon the operating environment of the vehicle and the driver registration input, and displaying the registered desired location graphic upon the head-up display.

US 2012/0257045 A discloses an imager system and method. The imager system is configured for use with a vehicle and has a plurality of imagers including a first imager having a first field of view, and a second imager having a second field of view The imager system further includes a video processor module configured to approximately synchronize at least the first and second imagers, and a serial data communication connection communicatively connecting the plurality of imagers and the video processor module, wherein at least the first and second imagers are approximately synchronized by communicating a synchronization signal via a connection other than the serial data communication connection, and the images captured by the first and second imagers are approximately synchronized without buffering the captured images.

WO 2015/156818 A discloses an autonomous vehicle control system including a sensing system, a remote vehicle determination system and a controller. The sensing system is disposed on a host vehicle and is configured to sense a visual condition of a driver of the host vehicle. The remote vehicle determination system is disposed on the host vehicle, and is configured to determine a position of a remote vehicle in an area adjacent the host vehicle. The controller is configured to control the autonomous vehicle control system to move the host vehicle relative to a lane marker based on the visual condition and the position of a remote vehicle.

DE 10 2006 043 150 A discloses an assistant having an identification unit for identifying a gap for a safe pass of a motor vehicle on a target lane based on data of an environment sensor. A deciding device decides whether a lane change of a driver is accepted. A commanding device displays a speed command in case of the lane change during a distance-regulated following of the motor vehicle at a given distance from an ahead-driving vehicle, and when identifying the gap on the target lane based on a transverse movement of the motor vehicle.

The lane change maneuver is a complex, and an inappropriate lane change maneuver easily results in a crash. Lane change crashes, or more specifically the lane change family of crashes, are defined as two-vehicle crashes that occur when one vehicle encroaches into the path of another vehicle initially on a parallel path with the first vehicle and traveling in the same direction

The lane change decision is a process of choosing a target lane and a target gap. The lane change preparation is the process that lane change driver prepare for further lane change execution by adjusting their speeds and gaps to surrounding vehicles. The lane change execution is the final stage of the lane change, in which the vehicle finishes the final lateral movement from the current lane to the target lane.

Several lane change aid systems are known to the skilled person, e.g., radar-based lane change warning systems. The radar-based lane-change warning systems warn vehicle drivers about other vehicles in their blind spots when they are making lane-changing decisions. However, the existing lane change aid systems have some shortcomings.

First, existing lane change aid systems merely provide information of the states of the vehicles on the target lane, e.g., the position, speed. They are not aiding the lane change execution, since finishing the lane change process still depends on drivers' own judgment. The existing systems do not provide any suggestions to help the driver to execute the lane change process safe and quick. Therefore, it is an object to improve the existing lane change aid systems.

Second, the state of the art lane change aid systems easily cause distractions to the driver. The existing lane change aid systems require the driver to put attention on the system to read the information, which brings a considerable risk to the driver. Therefore it is an object to provide a lane change aid system that reduces the distraction to the driver.

Additional advantages, objects, and features will be set forth in part in the description which follows and in part will become apparent to those having ordinary skill in the art upon examination of the following or may be learned from practice. The objectives and other advantages may be realized and attained by the structure particularly pointed out in the written description and claims hereof as well as the appended drawings.

The above objects are among those solved by the subject matter of the independent claims. The dependent claims relate to further aspects of the invention.

In one aspect of the invention a method of assisting a full lane change process with the help of an augmented reality device is provided. The method using at least five cameras provided on a vehicle, a computational device, and an augmented reality device. The method comprises the steps of capturing images with the at least five cameras, generating lane change information from the captured images, and displaying the information with the augmented reality device. The step of generating lane change information comprises the further steps of detecting lanes, detecting the position and velocities of other vehicles surrounding the vehicle, and generating at least one lane change recommendation in a lane change recommendation unit.

In another aspect of the invention at least a first camera is imaging an area in the driving direction of the vehicle, and at least a second and third camera and a fourth and fifth camera are imaging an area on a left and a right side of the vehicle, respectively.

In another aspect of the invention the first camera is capturing images from a position close to or at the front of the vehicle and/or the second and third camera and a fourth and fifth camera are capturing images from a position close to or at the left and right side mirror of the vehicle, respectively.

In another aspect of the invention the step of detecting lanes comprises, locating areas of interest in the captured images according to the grey level of different areas, and detecting the edges of the road and/or the lane lines, preferably by using a Sobel method.

In another aspect of the invention the detecting of vehicles includes locating areas of interest in the captured images according to the grey level of different areas, and extracting the boundary of at least one vehicle, preferably by a Haar-like feature detector, preferably using an AdaBoost algorithm.

In another aspect of the invention the number of false positives is reduced by using two different techniques, preferably a size filter technique and an aspect ratio filter technique.

In another aspect of the invention generating the positions and velocities of the surrounding vehicles includes the step of transforming a coordinate system from one perspective to another using Inverse Perspective Mapping technology, and using the time difference between two subsequent frames to calculate a relative velocity between the other vehicles and/or the vehicle.

In another aspect of the invention displaying the information comprises at least one further step of converting the at least one lane change recommendation into a graphical information and displaying the graphical information on an augmented reality device, preferably with other information relevant to the driver.

In another aspect of the invention the generating of at least one lane change recommendations includes making a lane change decision and/or to select a target lane and/or a target gap; providing information whether the target gap and target speed are ready or not; providing information on adjusting gaps between the vehicle and the surrounding vehicles; providing information on synchronizing the speed of the vehicle to the target lane speed; and/or providing information on the a lane change execution.

In another aspect of the invention prior to using the cameras as calibrated, the calibration step comprises finding the camera focal length using the chessboard calibration; and/or calibrating the cameras to estimate the real world length of a pixel.

In another aspect of the invention a system for assisting a full lane change process with the help of an augmented reality device is provided. The System comprises at least five cameras provided on a vehicle and configured to capture images. The system further comprises a computational device configured to generate lane change information from captured images. The system still further comprises an augmented reality device configured to display the lane change information. Furthermore, to generate lane change information the system is further configured to detect lanes and to detect the position and velocities of other vehicles surrounding the vehicle and further configured to generate at least one lane change recommendation in a lane change recommendation unit.

In another aspect of the invention at least a first camera is adopted to image an area in the driving direction of the vehicle, and at least a second and third camera and a fourth and fifth camera are adopted to image an area on a left and a right side of the vehicle, respectively.

In another aspect of the invention the first camera is positioned close to or at the front of the vehicle and the second and third camera and a fourth and fifth camera are positioned close to or at the left and right side mirror of the vehicle, respectively.

In another aspect of the invention in order to detect lanes the system is further configured to locate areas of interest in the captured images according to the grey level of different areas, and to detect the edges of the road and/or the lane lines, preferably by using a Sobel method.

In another aspect of the invention in order to detect vehicles the system is further configured to locate areas of interest in the captured images according to the grey level of different areas, and to extract the boundary of at least one vehicle, preferably by a Haar-like feature detector, preferably using an AdaBoost algorithm.

In another aspect of the invention the system is configured to reduce the number of false positives by using two different techniques, preferably a size filter technique and an aspect ratio filter technique.

In another aspect of the invention the system is configured to use Inverse Perspective Mapping technology to generate the positions and velocities of the surrounding vehicles by transforming a coordinate system from one perspective to another, and to use the time difference between two subsequent frames to calculate a relative velocity between the other vehicles and the vehicle.

In another aspect of the invention the system is configured to convert the at least one lane change recommendation into a graphical information and to display the graphical information on the augmented reality device, preferably with other information relevant to the driver.

A system for assisting a full lane change process with the help of an augmented reality device comprises a traffic state acquisition unit configured to generate a position and speed information for vehicles of interest, including a lane change vehicle, a preceding vehicle on a current lane, a preceding vehicle and a lag vehicle on a left lane, and a preceding vehicle and a lag vehicle on a right lane. The system further comprises a lane change recommendation unit configured to provide a lane change recommendation for the driver according to a full lane change model including lane change decision model, a lane change preparation model, and a lane change execution model. The system still further comprises a lane change recommendation display unit configured to convert the lane change recommendation into a graphic information and display it on an augmented reality device.

In another aspect of the invention a vehicle with a system for assisting a full lane change process with the help of an augmented reality device is provided. The system is configured to perform the method according to any preceding aspects of the invention.

In one embodiment of the invention a lane change aid system with the help of augmented reality technology is provided. By using the graphic processing technique instead of radar, the system is able to detect the vehicle position and velocity in real time. Using lane-changing models and vehicle detection technology, the system provides the driver with augmented information on an augmented reality device, such as displaying a symbol or a maneuver recommendation on an augmented reality device. The system allows for a safe lane change and reduces the risk of lane change execution collision to a minimum level. Compared to the state of the art lane change aid systems, the system according to the invention offers two improvements.

First, the system not only provides a danger warning for the driver, but also provides recommendations to help the driver to make a lane change decision, prepare for the lane change maneuver, and guides the driver through the execution of the lane change maneuver.

Second, the system reduces the distractions caused to the driver by the lane change aid system by adopting the augmented reality technology. Using an augmented reality device, the driver does not need to turn the head to watch a mirror; instead the driver may only need to follow the guidance displayed on the augmented reality device. In one embodiment of the invention the apparatus and/or the system, according to an aspect of the invention, includes cameras installed on both sides of the lane change vehicle for capturing the vehicle and lane images and a control that is responsive to an output of said imaging device to recognize the position of the vehicles and which lane the vehicle is on. The control is operable to distinguish between certain types of vehicles. The control may provide the distance, relative velocity, acceleration, and time gap of the included vehicles for further processing.

In one embodiment of the invention the apparatus and/or the system, according to an aspect of the invention, includes a forward-facing imaging device for capturing images of the preceding vehicles both on the current and adjacent lanes and a control that is responsive to an output of said imaging device to calculate the distance and velocity of the preceding vehicle of the lane change vehicle. The control may also provide the distance, relative velocity, acceleration, and time gap of the preceding vehicle for further processing.

In one embodiment of the invention the apparatus and/or the system, according to an aspect of the invention, includes a computing device configured for processing the information collected from the outside and producing a lane change guidance and a control that is responsive to an output of said imaging device to calculate the distance and velocity of the vehicles. The computing device may include a lane change aid algorithm to make decisions and recommendation for the driver. The control may include a wireless transmission channel to transmit the lane change recommendations to the augmented reality device.

### Brief Description of the Drawings

The accompanying drawings, which are included to provide a further understanding of the present invention and are incorporated in and constitute a part of this application, illustrate embodiment(s) of the present invention and together with the description serve to explain the principle of the present invention. In the drawings:
- Fig. 1: shows a schematic diagram of an embodiment of the invention,
- Fig. 2: shows the area covered by the at least five cameras 104 in an embodiment of the invention,
- Fig. 3: shows a flow diagram for the processing in the traffic state acquisition unit 100 in one embodiment of the invention,
- Fig. 4: shows the flow diagram for the processing in the vehicle detection unit 101 in one embodiment of the invention,
- Fig. 5: illustrates the calibration of a camera according to one embodiment of the invention,
- Fig. 6: shows the work flow of the lane change recommendation unit 200 in one embodiment of the invention, and
- Fig. 7: shows the lane change guidance information as it may be displayed on an augmented reality device interface in one embodiment of the invention.

### Detailed Description of Preferred Embodiments

Hereinafter, exemplary embodiments of the present invention will be described in detail with reference to the accompanying drawings. The same reference numerals used throughout the specification refer to the same constituent elements. The skilled person will recognize that some of the features of the subject-matter can be implemented in different devices device. In particular, different steps of the method can be performed in different physical devices. For example, the image processing can be performed in part in a camera, in a computing device, and/or in an augmented reality device.

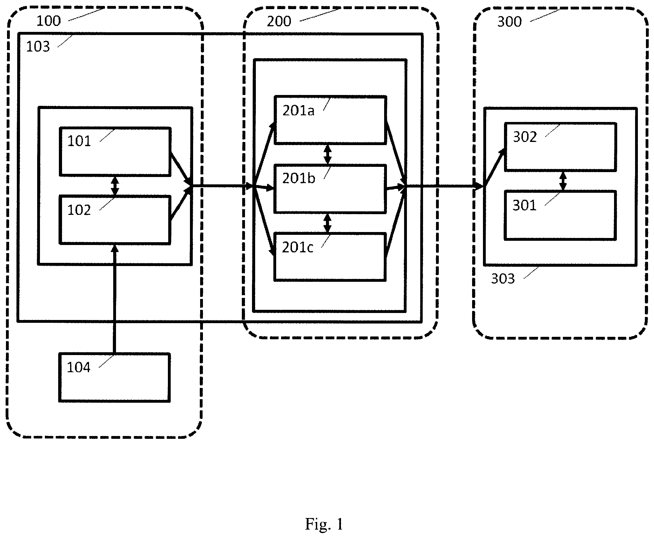

Fig. 1 shows a schematic diagram of an embodiment of the invention. The embodiment comprises three functional units. A traffic state acquisition unit 100, a lane change recommendation unit 200, and a lane change recommendation display unit 300.

The traffic state acquisition unit 100 comprises the cameras 104, a lane detection unit 102, and a vehicle detection unit 101. The computational part of the traffic state acquisition unit 100 may be implemented in a computing device 103. The traffic state acquisition unit is operationally connected to a lane change recommendation unit 200. The cameras 104 are operationally connected to the computing device 103.

The lane change recommendation unit 200 comprises a full lane change model 201 including a lane change decision model 201a, a lane change preparation model 201b, and a lane change execution model 201c. The computational part of the lane change recommendation unit 200 may be implemented in the computing device 103. The lane change recommendation unit 200 is operationally connected to the traffic state acquisition unit 100 and the lane change recommendation display unit 300.

The lane change recommendation display unit 300 comprises an augmented reality image processing unit 302 and an augmented reality display unit 301. The computational part of the lane change recommendation display unit 300 is preferably implemented in the computing device 103 and/or the augmented reality display unit 301 itself. The augmented reality image processing unit 302 and the augmented reality display unit 301 are preferably implemented in the augmented reality device 303.

In one embodiment of the invention the computing device 103 is used to process the images and extract the needed information. In an exemplary embodiment OpenCV 2.4 may be used to handle the computer vision.

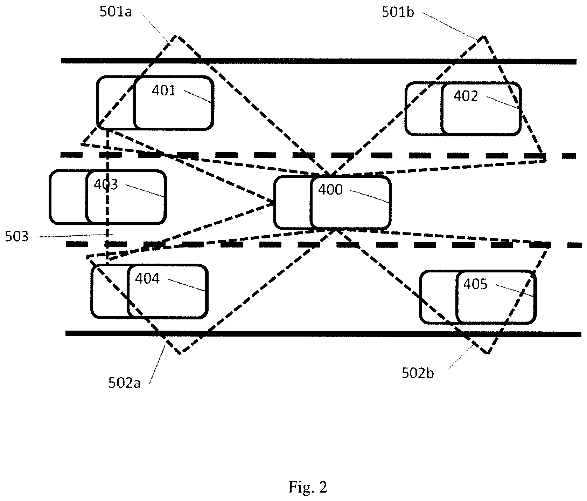

In one embodiment of the invention within the traffic state acquisition unit 100, the cameras 104 capture images of an area (c.f. Fig. 2) including the current lane, where the lane change vehicle 400 is, and a left lane and a right lane with respect to the current lane. The images are then transmitted as input images to the computing unit 103. Still within the traffic state acquisition unit 100 the lane detection unit 102 identifies road lanes and the vehicle detection unit 101 recognizes vehicles on the current and adjacent lanes.

In one embodiment of the invention, the traffic state acquisition unit 100 transmits the distances and velocities of the surrounding vehicles of the lane change vehicle 400 to the lane change model 201 in the lane change recommendation unit 200. The lane change recommendation unit 200 generates a lane change recommendation and transmits lane change recommendation to the lane change recommendation display unit 300.

In one embodiment of the invention within the lane change recommendation display unit 300, the received lane change recommendation is processed in the augmented reality image processing unit 302 and displayed in the augmented reality display unit 301.

Fig. 2 shows the area covered by the at least five cameras 104a, 104b, 104c, 104d, 104e in one embodiment of the invention of the invention. The five cameras 104a, 104b, 104c, 104d, 104e are positioned on the left side mirror, right side mirror and front face of the vehicle, respectively. The front camera 104c captures images of an area 503 in front of the vehicle (400), i.e., the preceding vehicles 403 on the current lane may be captured by the first camera 104c. The left side cameras 104a and 104b capture a forward area 502a and a backward area 502b on the left side of the vehicle 400, i.e., they capture the left preceding vehicle404 and left lag vehicle 405 on the left adjacent lanes. The right side cameras 104d and 104e capture a forward area 501a and a backward area 501b on the right side of the vehicle 400, i.e., they capture the right preceding vehicle404 and right lag vehicle 405 on the right adjacent lanes. For illustration purpose in this embodiment five vehicles need to be monitored, the vehicles 401, 402, 403, 404, and 405. These five vehicles 401, 402, 403, 404, and 405 have an effect on the lane change behavior and are included in the lane change model unit 201.. If one of the five vehicles is not present in the area of interest 501, 502, 503, it will not be considered in the lane change model unit 201. Furthermore, the lane change vehicle 400 is shown in Fig. 2.

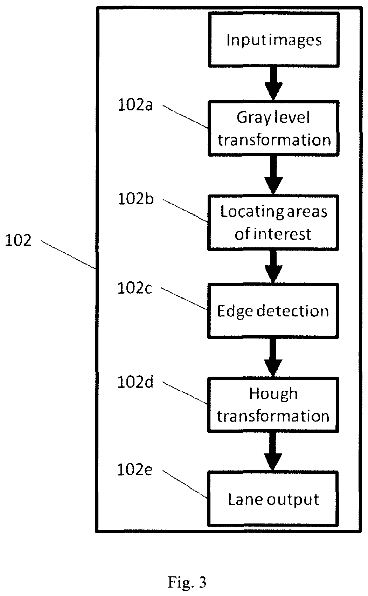

Fig. 3 shows a flow diagram for the processing in the traffic state acquisition unit 100 in one embodiment of the invention. The processing is preferably performed in the lane detection unit 102. The captured pictures are processed to locate and extract the lane lines. In the current embodiment the captured input images are RGB color images that may consume a lot of processing time, in a first step they are transformed to gray images in part 102a.

Then part 102b is used to locate the area of interest, i.e., the road area. Since different areas have different gray levels and compared to other areas, the road area has a lower gray level, part 102b may use the gray levels to extract the road area.

Part102c further extracts the edges of the roads, which are the lane lines. The method used in part 102c to extract lane lines may be the Sobel method. However, after employing part 102c, although lane lines are extracted from the original images, a lot of noise may still exist.

In a next step part 102d is employed. Part 102d is adopted to reduce noise and finally obtain the road edges and lanes. 102d is preferably an Hough transform method. Finally, the lanes are detected and output by part 102e.

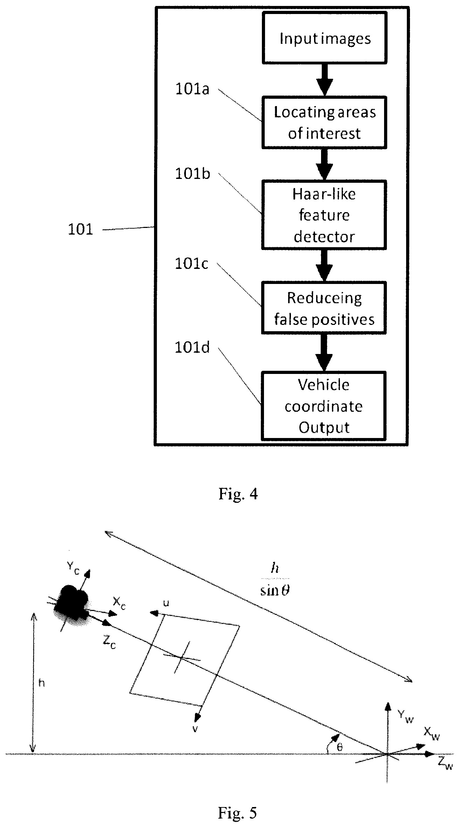

Fig. 4 shows the flow diagram for the processing in the vehicle detection unit 101 in one embodiment of the invention. In one embodiment of the invention, a Haar-like feature detector algorithm is adopted to detect the vehicles 401, 402, 403, 404, and 405 from the captured input images. The vehicle detection unit 101 performs the preprocessing for every image (frame) captured from the cameras in order to improve the overall efficiency and accuracy.

In one embodiment of the invention in part 101a the area of interest is located. Although the input image preferably has been resized, the size of input images may still be too large for the feature detection algorithm. Locating the areas of interest of the input images is required in order to make the vehicle detection unit 101 to respond in real-time. Preferably, the center of the resized grey input images is chosen as the area of interest for detecting vehicles.

In one embodiment of the invention a calibration of the position of the respective camera 104 is required so that the target vehicles 401, 402, 403, 404, and 405 may always appear in the center of the respective input images.

In one embodiment of the invention in part 101b preferably a Haar-like feature detection algorithm is used for vehicle detection. The Haar-like feature detector in part 101b preferably uses an AdaBoost algorithm because of its fast speed and high accuracy, as it is commonly used in face detection. The Haar-like feature detector in part 101b may need to be retrained to be used in detection of vehicles. Preferably a tool to perform basic operation of training data is used for the retraining of the Haar-like feature detector in part 101b. For example, imglab is preferably used.

A false positive is a result that the Haar-like feature detector in part 101b points out as an object to be a vehicle, but the object not being a vehicle. False positives will greatly reduce accuracy of the traffic state acquisition unit 100.

In one embodiment of the invention part 101c is used to reduce the number of false positives. In one embodiment of the invention two different techniques are adopted in part 101c, namely, a size filter and an aspect ratio filter. The size filter will filter out the detected vehicle if the height of it is too large or too small. The aspect ratio filter makes use of the general aspect ratio of a vehicle. Most vehicles have an aspect ratio, i.e., the width-to-height ratio, ranging from 0.4 to 1.6. If the aspect ratio of a detected vehicle is out of said range, it is probably a false positive and part 101s preferably abandons the result.

In one embodiment of the invention part 101d provides the bottom coordinate of a verified vehicle to the Inverse Perspective Mapping (IPM) subsystem 600 for further determining the vehicles distance and relative velocity.

Fig. 5 illustrates the calibration of a camera according to one embodiment of the invention. To use the IPM subsystem 600, the cameras 104 have to be calibrated. The height *h* of a camera 104, the angle *θ* from the camera to the ground and the focal length K of the camera 104 are required to map pixel on the image plane to a top down view. The measures *h* and / are obtained by adjusting the position and orientation of the camera, while the camera focal length K needs to be estimated by calibrating the camera. The camera focal length K is found using the chessboard calibration which is well known to the skilled person. Preferably the chessboard calibration, as it is included in the OpenCV [1] library, may be used to calculate the focal length K of a camera. The information about the height *h* of the camera, the angle *θ* from the camera to the ground and the focal length *K* of the camera are obtained and stored in the calibration process.

After the calibration process for the IPM has been performed once, the IPM transformation can be performed. Pixels P between two objects in the transformed image will represent their distance.

To relate the pixels to a real world distance, the distance calibration has to be performed as well prior to the first use of one embodiment of the invention. For the distance calibration the camera 104 may be mounted on a fixed known height *h* and angle *θ*, then a string with length *l* will be placed in front of the camera. After the camera 104 takes a picture of the string, the image will be fed to the IPM algorithm along with the focal length *K* of the camera 104. The numbers of pixels *p* occupied by the length / string in the transformed image will represent length *l* in real world. By dividing *l* by *p,* the length one pixel represent in real world can be estimated.

The above described calibration method is not meant to limit the scope if the invention. In general any calibration method may be used for calibrating the cameras 104 that allows relating the pixel number obtained by the IPM to a real world distance. Moreover, once the calibration has been performed the calibration parameters can be stored and/or used for any identical and/or similar camera positioned in a same/similar height and angle.

In one embodiment of the invention a calibrated traffic state acquisition unit 100, provides the distance and relative between the lane change vehicle 400 and any target vehicle 401, 402, 403, 404, and 405. The relative velocity for can be any target vehicle 401, 402, 403, 404, and 405 can be calculated by dividing the distance difference *d* and time difference *t* between two frames. For the processing in the lane change recommendation unit 200 the relative speed is required instead of an absolute speed.

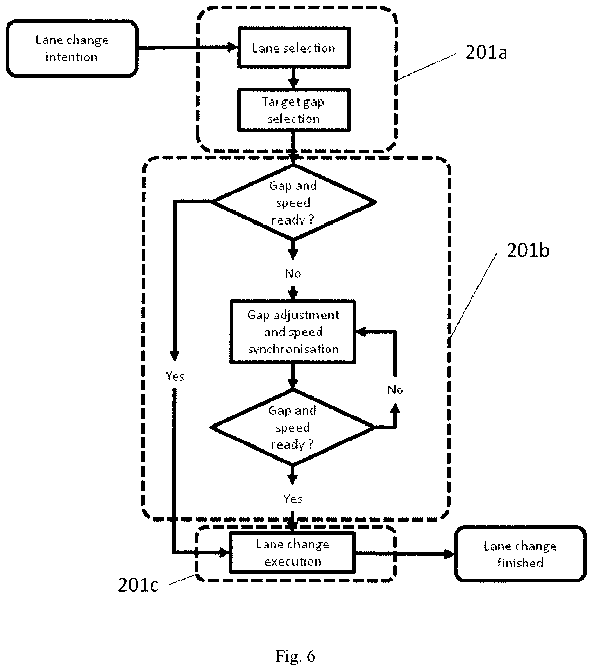

Fig. 6 shows the work flow of the lane change recommendation unit 200 in one embodiment of the invention. The obtained vehicle information from the traffic state acquisition unit 100 is used to produce lane change recommendation within the lane change model unit 201. The lane change model unit 201 comprises three parts, the lane change decision unit 201a, lane change preparation unit 201b, and the lane change execution unit 201c.

In a first step the lane change decision unit 201a, upon the driver inputting a lane change intention, makes a decision to determine which lane to change in. Then a target gap is selected in the selected lane. Alternatively or in addition the driver may input a target lane and a target gap.

In a next step the lane change preparation unit 201b determines whether or not the target gap and speed are suitable to further conduct a lane change execution. If yes, the driver can continue to execute the lane change; if not, the driver has to further adjust the gaps to other vehicles 401, 402, 403, 404, and 405or synchronize the speed to the surrounding vehicles 401, 402, 403, 404, and 405 on the target lane.

In a final step the lane change execution unit 201c is employed while the driver executes the lane change.

Depending on the respective situation the corresponding lane change recommendation is send to the lane change recommendation display unit 300 to be displayed in the augmented reality display unit 302. The lane change model unit 201 preferably uses a lane decision model such as the one proposed by Gipps [2].

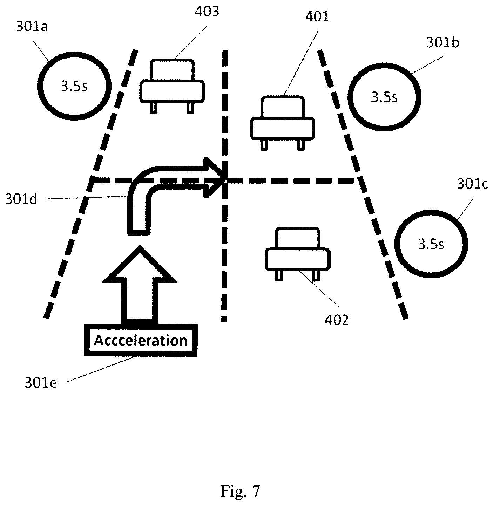

Fig. 7 shows the lane change guidance information as it may be displayed on an augmented reality device interface in one embodiment of the invention. The lane change recommendation is received by the lane change recommendation display unit 300 is processed in the augmented reality image processing unit 302. The reality image processing unit 302 generates graphical information to be displayed on the augmented reality display unit 301.

In one embodiment of the invention the surrounding vehicles are displayed, i.e., the preceding vehicle 403 on the current lane, the preceding vehicle 401 on the target lane, and the lag vehicle 402 on the target lane. The time gaps 301a, 301b, and 301c for the respective one of the three vehicles are displayed. Furthermore, an arrow 301d is displayed to point out the appropriate lane change point. Alternatively or in addition an instruction field 301e, e.g., "acceleration" or "deceleration", is displayed to the driver.

In one embodiment the augmented reality display unit displays the graphical lane change guidance information as a graphical overlay in the field of view of the driver. Furthermore, the interaction between the driver and the system and/or method, such as expressing the lane change intention, is performed with a hands free human interface device, e.g., a voice control input or a facial recognition input.

In one embodiment of the invention the system, apparatus and/or method automatically and/or continuously provides the driver with lane change information.

In one embodiment of the invention the system, apparatus and/or method is implemented in the vehicles 400 electronic system and is preferably using build-in hardware components, e.g., and on board computing device and/or on board cameras and/or augmented reality device.

In one embodiment of the invention the system, apparatus and/or method is implemented in the vehicles 400 electronic system and is preferably using build in hardware devices, e.g., and on board computing device and/or on board cameras. However, in this embodiment the system, apparatus and/or method uses and separate augmented reality device.

In one embodiment of the invention the system, apparatus and/or method is implemented in separated hardware devices but connects to the vehicle 400 and uses an augmented reality device build into the vehicle.

In one embodiment of the invention the system, apparatus and/or method is implemented in separated hardware devices and uses a separate augmented reality device.

In one embodiment of the invention the different parts of the invention are operationally interconnected with each other using suitable connecting means. The connecting means may comprise, a physical connecting means, i.e., a cable, and/or wireless connecting means, e.g., Wi-Fi or Bluetooth.

In one embodiment of the invention the augmented reality device is preferably a wearable electronic device, e.g. smart glasses.

### References

[1] Opencv.org, 'Camera Calibration with OpenCV', 2015. [Online]. Available: http://docs.opencv.org/2.4/doc/tutorials/calib3d/camera_calibration/camera_calibration.html:
[2] Gipps P G. A model for the structure of lane-changing decisions. Transportation Research Part B: Methodological, 1986, 20(5): 403-414.
[3] Sen, Basav, John D. Smith, and Wassim G. Najm. Analysis of lane change crashes. DOT-VNTSC-NHTSA-02-03/ DOT HS 809 571, 2003.
[4] L. Trego, "Lane-change Warning System," SAE International, 10 Oct. 2008; [Online]. Available: articles.sae.org/4545/.
[5] DasAuto, "Side Assist," 2015; http://en.volkswagen.com/en/innovation-and-technology/technical-glossary/spurwechselassistentsideassist.html
[6] Opencv.org, 'OpenCV | OpenCV', 2015. [Online]. Available: http://opencv.org/.
[7] R.C. Gonzalez, R.E. Woods, Digital Image Processing, Addison-Wesley, New York, 1992.
[8] Illingworth J, Kittler J. A survey of the Hough transform. Computer vision, graphics, and image processing, 1988, 44(1): 87-116.
[9] Docs.opencv.org, 'Cascade Classification - OpenCV 2.4.12.0 documentation', 2015. [Online].Available: http://docs.opencv.org/2.4/modules/objdetect/doc/ cascade_classification.html.
[10] Viola, P., Jones, M., & Snow, D. (2003). Detecting pedestrians using patterns of motion and appearance, 9th IEEE International Conference on Computer Vision (ICCV 2003), 14-17 October 2003, Nice, France, 734-741
[11] Teoh, S.S., & Bräunl, T. (2012). Symmetry-based monocular vehicle detection system. Machine Vision and Applications, 23:831-842.
[12] S.Tuohy et al., "Distance Determination for an Automobile Environment using Inverse Perspective Mapping in OpenCV," Proc. 21st IET Irish Signals and Systems Conf. (ISSC 2010), June. 2010;

## Claims

1. A method of assisting a full lane change process with the help of an augmented reality device (303), the method using at least five cameras (104a, 104b, 104c, 104d, 104e) provided on a vehicle (400), a computational device (103), and the augmented reality device (303), wherein the method comprises the steps of:
a) capturing images with the at least five cameras (104a, 104b, 104c, 104d, 104e);
b) generating lane change information from the captured images;
c) displaying the lane change information with the augmented reality device (303); wherein the step of generating lane change information comprises the further steps of:
b1) detecting lanes,
b2) detecting the position and velocities of other vehicles (401, 402, 403, 404, 405) surrounding the vehicle (400), and
b3) generating at least one lane change recommendation in a lane change recommendation unit (200).

2. The method according to claim 1, wherein at least a first camera (104c) is imaging an area in the driving direction of the vehicle, and at least a second (104a) and third (104b) camera and a fourth (104d) and fifth (104e) camera are imaging an area on a left and a right side of the vehicle, respectively.

3. The method according to claim 2, wherein the first camera (104c) is capturing images from a position close to or at the front of the vehicle (400) and/or the second (104a) and third (104b) camera and a fourth (104d) and fifth (104e) camera are capturing images from a position close to or at the left and right side mirror of the vehicle (400), respectively.

4. The method according to any one of claims 1 to 3, wherein the step of detecting lanes comprises, locating areas of interest in the captured images according to the grey level of different areas, and detecting the edges of the road and/or the lane lines, preferably by using a Sobel method.

5. The method according to any one of claims 1 to 4, wherein the detecting of vehicles includes locating areas of interest in the captured images according to the grey level of different areas, and extracting the boundary of at least one vehicle, preferably by a Haar-like feature detector, preferably using an AdaBoost algorithm.

6. The method according to any one of claims 1 to 5, wherein generating the positions and velocities of the surrounding vehicles (401, 402, 403, 404, 405) includes the step of transforming a coordinate system from one perspective to another using Inverse Perspective Mapping technology, and using the time difference between two subsequent frames to calculate a relative velocity between the other vehicles (401, 402, 403, 404, 405) and the vehicle (400).

7. The method according to any one of claims 1 to 6, wherein the step of displaying the information comprises at least one further step of converting the at least one lane change recommendation into a graphical information and displaying the graphical information on an augmented reality device (303), preferably with other information relevant to the driver.

8. The method according to any one of claims 4 to 7, wherein the generating of at least one lane change recommendations includes:
making a lane change decision recommendation and/or selecting a target lane and/or selecting a target gap;
providing information whether the target gap and target speed are appropriate or not;
providing information on adjusting gaps between the vehicle and the surrounding vehicles (401, 402, 403, 404, 405);
providing information on synchronizing the speed of the vehicle (400) to the target lane vehicle speed; and/or
providing information on a lane change execution.

9. A system for assisting a full lane change process with the help of an augmented reality device (303), the system comprising
at least five cameras (104a, 104b, 104c, 104d, 104e) provided on a vehicle (400) and configured to capture images,
a computational device (103) configured to generate lane change information from captured images, and
an augmented reality device (303) configured to display the lane change information, wherein
to generate lane change information the system is further configured to detect lanes and to detect the position and velocities of other vehicles (401, 402, 403, 404, 405) surrounding the vehicle (400) and further configured to generate at least one lane change recommendation in a lane change recommendation unit (200).

10. The system according to claim 9, wherein at least a first camera (104c) is adopted to image an area in the driving direction of the vehicle, and at least a second (104a) and third (104b) camera and a fourth (104d) and fifth (104e) camera are adopted to image an area on a left and a right side of the vehicle (400), respectively.

11. The system according to claim 10, wherein the first camera (104c) is positioned close to or at the front of the vehicle and the second (104a) and third (104b) camera and a fourth (104d) and fifth (104e) camera are positioned close to or at the left and right side mirror of the vehicle (400), respectively.

12. The system according to any one of claims 9 to 11, wherein to generate lane change information the system is further configured to detect lanes and to detect the position and velocities of other vehicles (401, 402, 403, 404, 405) surrounding the vehicle (400).

13. The system according to any one of claims 9 to 12, wherein to detect lanes the system is further configured to locate areas of interest in the captured images according to the grey level of different areas, and to detect the edges of the road and/or the lane lines, preferably by using a Sobel method.

14. The system according to any one of claims 9 to 13, wherein the system is configured to use Inverse Perspective Mapping technology to generate the positions and velocities of the surrounding vehicles (401, 402, 403, 404, 405) by transforming a coordinate system from one perspective to another, and to use the time difference between two subsequent frames to calculate a relative velocity between the other vehicles (401, 402, 403, 404, 405) and the vehicle (400).

15. A vehicle with a system for assisting a full lane change process with the help of an augmented reality device (303), wherein the system is configured to perform the method of any one of claims 1 to 8.

## Patentansprüche

1. Verfahren zum Unterstützen eines vollständigen Spurwechselprozesses mit Hilfe einer Vorrichtung (303) für eine erweiterte Realität, wobei das Verfahren mindestens fünf Kameras (104a, 104b, 104c, 104d, 104e), die an einem Fahrzeug (400) vorgesehen sind, eine Rechenvorrichtung (103) und die Vorrichtung (303) für eine erweiterte Realität verwendet, wobei das Verfahren die Schritte aufweist:
a) Aufnehmen von Bildern mit den mindestens fünf Kameras (104a, 104b, 104c, 104d, 104e);
b) Erzeugen von Spurwechselinformationen aus den aufgenommenen Bildern;
c) Anzeigen der Spurwechselinformationen mit der Vorrichtung (303) für eine erweiterte Realität; wobei der Schritt des Erzeugens von Spurwechselinformationen die weiteren Schritte aufweist:
b1) Erfassen von Fahrspuren,
b2) Erfassen der Position und der Geschwindigkeiten von anderen Fahrzeugen (401, 402, 403, 404, 405), die das Fahrzeug (400) umgeben, und
b3) Erzeugen von mindestens einer Spurwechselempfehlung in einer Spurwechselempfehlungseinheit (200).

2. Verfahren nach Anspruch 1, wobei mindestens eine erste Kamera (104c) einen Bereich in der Fahrtrichtung des Fahrzeugs abbildet, und mindestens eine zweite (104a) und dritte (104b) Kamera und eine vierte (104d) und fünfte (104e) Kamera einen Bereich auf einer linken bzw. einer rechten Seite des Fahrzeugs abbilden.

3. Verfahren nach Anspruch 2, wobei die erste Kamera (104c) Bilder von einer Position nahe oder an der Vorderseite des Fahrzeugs (400) aufnimmt und/oder die zweite (104a) und dritte (104b) Kamera und eine vierte (104d) und fünfte (104e) Kamera Bilder von einer Position nahe oder am linken bzw. rechten Seitenspiegel des Fahrzeugs (400) aufnehmen.

4. Verfahren nach einem der Ansprüche 1 bis 3, wobei der Schritt des Erfassens von Fahrspuren das Lokalisieren von interessierenden Bereichen in den aufgenommenen Bildern gemäß der Graustufe von verschiedenen Bereichen und das Erfassen der Straßenränder und/oder der Fahrspurlinien, vorzugsweise unter Verwendung eines Sobel-Verfahrens aufweist.

5. Verfahren nach einem der Ansprüche 1 bis 4, wobei das Erfassen von Fahrzeugen das Lokalisieren von interessierenden Bereichen in den aufgenommenen Bildern gemäß der Graustufe von verschiedenen Bereichen und das Extrahieren der Begrenzung von mindestens einem Fahrzeug, vorzugsweise durch einen Haar-ähnlichen Merkmalsdetektor, vorzugsweise unter Verwendung eines AdaBoost-Algorithmus aufweist.

6. Verfahren nach einem der Ansprüche 1 bis 5, wobei das Erzeugen der Positionen und Geschwindigkeiten der umgebenden Fahrzeuge (401, 402, 403, 404, 405) den Schritt des Transformierens eines Koordinatensystems von einer Perspektive zu einer anderen unter Verwendung einer inversen perspektivischen Abbildungstechnologie und unter Verwendung der Zeitdifferenz zwischen zwei aufeinanderfolgenden Rahmen aufweist, um eine Relativgeschwindigkeit zwischen den anderen Fahrzeugen (401, 402, 403, 404, 405) und dem Fahrzeug (400) zu berechnen.

7. Verfahren nach einem der Ansprüche 1 bis 6, wobei der Schritt des Anzeigens der Informationen mindestens einen weiteren Schritt des Umwandelns der mindestens einen Spurwechselempfehlung in grafische Informationen und des Anzeigens der grafische Informationen auf einer Vorrichtung (303) für eine erweiterte Realität, vorzugsweise mit anderen für den Fahrer relevanten Informationen aufweist.

8. Verfahren nach einem der Ansprüche 4 bis 7, wobei das Erzeugen der mindestens einen Spurwechselempfehlung aufweist:
Abgeben einer Empfehlung zur Spurwechselentscheidung und/oder Auswählen einer Zielfahrspur und/oder Auswählen einer Ziellücke;
Bereitstellen von Informationen, ob die Ziellücke und Zielgeschwindigkeit geeignet sind oder nicht;
Bereitstellen von Informationen zum Anpassen von Lücken zwischen dem Fahrzeug und
den umgebenden Fahrzeuge (401, 402, 403, 404, 405);
Bereitstellen von Informationen zum Synchronisieren der Geschwindigkeit des Fahrzeugs (400) mit der Fahrzeuggeschwindigkeit der Zielfahrspur; und/oder Bereitstellen von Informationen über eine Spurwechselausführung.

9. System zur Unterstützung eines vollständigen Spurwechselprozesses mit Hilfe einer Vorrichtung (303) für eine erweiterte Realität, wobei das System aufweist:
mindestens fünf Kameras (104a, 104b, 104c, 104d, 104e), die an einem Fahrzeug (400) vorgesehen und konfiguriert sind, Bilder aufzunehmen,
eine Rechenvorrichtung (103), die konfiguriert ist, Spurwechselinformationen aus den aufgenommenen Bildern zu erzeugen, und
eine Vorrichtung (303) für eine erweiterte Realität, die konfiguriert ist, die Spurwechselinformationen zu erzeugen, wobei
das System, um Spurwechselinformationen zu erzeugen, ferner konfiguriert ist, Fahrspuren zu erfassen und die Position und Geschwindigkeiten von anderen Fahrzeugen (401, 402, 403, 404, 405) zu erfassen, die das Fahrzeug (400) umgeben, und ferner konfiguriert ist, in einer Spurwechselempfehlungseinheit (200) mindestens eine Spurwechselempfehlung zu erzeugen.

10. System nach Anspruch 9, wobei mindestens eine erste Kamera (104c) eingerichtet ist, einen Bereich in der Fahrtrichtung des Fahrzeugs abzubilden, und mindestens eine zweite (104a) und dritte (104b) Kamera und eine vierte (104d) und fünfte (104e) Kamera eingerichtet sind, einen Bereich auf einer linken bzw. einer rechten Seite des Fahrzeugs (400) abzubilden.

11. System nach Anspruch 10, wobei die erste Kamera (104c) nahe oder an der Vorderseite des Fahrzeugs (400) angeordnet ist und die zweite (104a) und dritte (104b) Kamera und eine vierte (104d) und fünfte (104e) Kamera nahe oder am linken bzw. rechten Seitenspiegel des Fahrzeugs (400) angeordnet sind.

12. System nach einem der Ansprüche 9 bis 11, wobei das System, um Spurwechselinformationen zu erzeugen, ferner konfiguriert ist, Fahrspuren zu erfassen und die Position und Geschwindigkeiten von anderen Fahrzeugen (401, 402, 403, 404, 405) zu erfassen, die das Fahrzeug (400) umgeben.

13. System nach einem der Ansprüche 9 bis 12, wobei das System, um Spurwechselinformationen zu erzeugen, ferner konfiguriert ist, interessierende Bereiche in den aufgenommenen Bildern gemäß der Graustufe von verschiedenen Bereichen zu lokalisieren und Straßenränder und/oder der Fahrspurlinien, vorzugsweise unter Verwendung eines Sobel-Verfahrens zu erfassen.

14. System nach einem der Ansprüche 9 bis 13, wobei das System konfiguriert ist, eine inverse perspektivische Abbildungstechnologie zu verwenden, um Positionen und Geschwindigkeiten der umgebenden Fahrzeuge (401, 402, 403, 404, 405) durch Transformieren eines Koordinatensystems von einer Perspektive zu einer anderen zu erzeugen, und die Zeitdifferenz zwischen zwei aufeinanderfolgenden Rahmen zu verwenden, um eine Relativgeschwindigkeit zwischen den anderen Fahrzeugen (401, 402, 403, 404, 405) und dem Fahrzeug (400) zu berechnen.

15. Fahrzeug mit einem System zur Unterstützung eines vollständigen Spurwechselprozesses mit Hilfe einer Vorrichtung (303) für eine erweiterte Realität, wobei das System konfiguriert ist, das Verfahren nach einem der Ansprüche 1 bis 8 auszuführen.

## Revendications

1. Procédé d'assistance à un processus de changement de voie complet au moyen d'un dispositif de réalité augmentée (303), ledit procédé recourant à au moins cinq caméras (104a, 104b, 104c, 104d, 104e) prévues sur un véhicule (400), à un dispositif informatique (103) et au dispositif de réalité augmentée (303), ledit procédé comprenant les étapes suivantes :
a) la capture d'images par les au moins cinq caméras (104a, 104b, 104c, 104d, 104e) ;
b) la génération d'informations de changement de voie à partir des images capturées ;
c) l'affichage des informations de changement de voie par le dispositif de réalité augmentée (303) ;
l'étape de génération des informations de changement de voie comprenant les autres étapes suivantes :
b1) la détection de voies,
b2) la détection de position et de vitesses d'autres véhicules (401, 402, 403, 404, 405) environnant le véhicule (400), et
b3) la génération d'au moins une recommandation de changement de voie dans une unité de recommandation de changement de voie (200).

2. Procédé selon la revendication 1, où au moins une première caméra (104c) capture des images d'une zone dans la direction de conduite du véhicule, et au moins une deuxième (104a) et une troisième (104b) caméras, et une quatrième (104d) et une cinquième (104e) caméras capturent respectivement des images d'une zone à gauche et à droite du véhicule.

3. Procédé selon la revendication 2, où la première caméra (104c) capture des images d'une position proche de l'avant du véhicule (400) ou en avant de celui-ci, et/ou la deuxième (104a) et la troisième (104b) caméras, et une quatrième (104d) et une cinquième (104e) caméras capturent respectivement des images d'une position proche du rétroviseur latéral gauche et du rétroviseur latéral droit du véhicule (400) ou contre ceux-ci.

4. Procédé selon l'une des revendications 1 à 3, où l'étape de détection des voies comprend la localisation de zones présentant un intérêt dans les images capturées en fonction du niveau de gris de différentes zones, et la détection des bords de la chaussée et/ou des lignes de couloir, préférentiellement au moyen d'une méthode Sobel.

5. Procédé selon l'une des revendications 1 à 4, où la détection de véhicules comprend la localisation de zones présentant un intérêt dans les images capturées en fonction du niveau de gris de différentes zones, et l'extraction de la limite d'au moins un véhicule, préférentiellement par un détecteur de fonction de type Haar, préférentiellement au moyen d'un algorithme AdaBoost.

6. Procédé selon l'une des revendications 1 à 5, où la génération des positions et vitesses des véhicules environnants (401, 402, 403, 404, 405) comprend l'étape de transformation d'un système de coordonnées d'une perspective à une autre au moyen d'une technologie de cartographie à perspective inversée, et au moyen de la différence temporelle entre deux trames successives pour calculer une vitesse relative entre les autres véhicules (401, 402, 403, 404, 405) et le véhicule (400).

7. Procédé selon l'une des revendications 1 à 6, où l'étape d'affichage des informations comprend au moins une autre étape de conversion de ladite au moins une recommandation de changement de voie en informations graphiques, et d'affichage des informations graphiques sur un dispositif de réalité augmentée (303), préférentiellement avec d'autres informations pertinentes pour le conducteur.

8. Procédé selon l'une des revendications 4 à 7, où la génération d'au moins une recommandation de changement de voie comprend :
l'émission d'une recommandation de décision de changement de voie et/ou la sélection d'une voie cible et/ou la sélection d'un créneau cible ;
la communication d'informations si le créneau cible et la vitesse cible sont appropriées ou non ;
la communication d'informations sur des ajustements de créneaux entre le véhicule et les véhicules environnants (401, 402, 403, 404, 405) ;
la communication d'informations sur la synchronisation de la vitesse du véhicule (400) à la vitesse des véhicules de la voie cible ; et/ou
la communication d'informations sur l'exécution d'un changement de voie.

9. Système d'assistance à un processus de changement de voie complet au moyen d'un dispositif de réalité augmentée (303), ledit système comprenant au moins cinq caméras (104a, 104b, 104c, 104d, 104e) prévues sur un véhicule (400) et destinées à capturer des images,
un dispositif informatique (103) prévu pour générer des informations de changement de voie à partir d'images capturées, et
un dispositif de réalité augmentée (303) prévu pour afficher les informations de changement de voie, où
pour générer des informations de changement de voie, ledit système est également prévu pour détecter des voies et pour détecter la position et la vitesse d'autres véhicules (401, 402, 403, 404, 405) environnant le véhicule (400), et est également prévu pour générer au moins une recommandation de changement de voie dans une unité de recommandation de changement de voie (200).

10. Système selon la revendication 9, où au moins une première caméra (104c) est adaptée pour capturer des images d'une zone dans la direction de conduite du véhicule, et au moins une deuxième (104a) et une troisième (104b) caméras, et une quatrième (104d) et une cinquième (104e) caméras sont adaptées pour capturer respectivement des images d'une zone à gauche et à droite du véhicule (400).

11. Système selon la revendication 10, où la première caméra (104c) est disposée à proximité de l'avant du véhicule (400) ou en avant de celui-ci, et la deuxième (104a) et la troisième (104b) caméras, et une quatrième (104d) et une cinquième (104e) caméras sont respectivement placées à proximité du rétroviseur latéral gauche et du rétroviseur latéral droit du véhicule (400) ou contre ceux-ci.

12. Système selon l'une des revendications 9 à 11, où, pour générer des informations de changement de voie, ledit système est également prévu pour détecter des voies et pour détecter la position et la vitesse d'autres véhicules (401, 402, 403, 404, 405) environnant le véhicule (400).

13. Système selon l'une des revendications 9 à 12, où, pour détecter des voies, ledit système est également prévu pour localiser des zones présentant un intérêt dans les images capturées en fonction du niveau de gris de différentes zones, et pour détecter les bords de la chaussée et/ou les lignes de couloir, préférentiellement au moyen d'une méthode Sobel.

14. Système selon l'une des revendications 9 à 13, où ledit système est prévu pour recourir à une technologie de cartographie à perspective inversée afin de générer les positions et les vitesses des véhicules environnants (401, 402, 403, 404, 405) par transformation d'un système des coordonnées d'une perspective à une autre, et pour recourir à la différence temporelle entre deux trames successives afin de calculer une vitesse relative entre les autres véhicules (401, 402, 403, 404, 405) et le véhicule (400).

15. Véhicule, comprenant un système d'assistance à un processus de changement de voie complet au moyen d'un dispositif de réalité augmentée (303), ledit système étant prévu pour exécuter le procédé selon l'une des revendications 1 à 8.
